Europäisches Patentamt

European Patent Office

Office européen des brevets

(11) Publication number: **0 398 408 A2**

# (12) EUROPEAN PATENT APPLICATION

(21) Application number: **90201110.5**

(22) Date of filing: **03.05.90**

(51) Int. Cl.⁵: **A23C 15/16, A23D 7/00**

(30) Priority: **15.05.89 GB 8911089**

(43) Date of publication of application:
**22.11.90 Bulletin 90/47**

(84) Designated Contracting States:
**AT BE CH DE DK ES FR GB GR IT LI NL SE**

(71) Applicant: **UNILEVER NV**
**Burgemeester s'Jacobplein 1 P.O. Box 760**
**NL-3000 DK Rotterdam(NL)**

(84) **BE CH DE DK ES FR GR IT LI NL SE AT**

Applicant: **UNILEVER PLC**
**Unilever House Blackfriars P.O. Box 68**
**London EC4P 4BQ(GB)**

(84) **GB**

(72) Inventor: **Ochmann, Rainer**
**Fredestrasse 18 A**
**D-4190 Kleve(DE)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) **Fatty spread containing native whey protein.**

(57) The invention relates to low fat spreads containing native, that is not substantially denatured, whey protein.

It is commonplace to Pasteurise the process stream in spread production under time/temperature conditions as to denature whey protein. The effect of denaturation is precipitation which removes the functional properties of the whey and can lead to a "mealy" product.

The invention provides a 35-80% fat phase W/O spread in which the water phase has pH 4.5-5.5, contains 0.5-10.0%wt of an undenatured whey protein, and has a lactose content below 20%wt of total protein content.

Such products have an improved long-term resistance to microbiological spoilage, avoid "mealyness" and utilise functional properties of the whey protein, such as water-binding ability and some effect as an emulsifier.

## FATTY SPREAD CONTAINING NATIVE WHEY PROTEIN

The present invention relates to low fat spreads containing native, that is not substantially denatured, whey protein.

Low fat spreads are known which contain around 40% fat on product and which have a gelled or thickened aqueous phase.

In some of these products the aqueous phase contains milk protein and the thickener is a hydrocolloid such as gelatine.

Examples of such products are disclosed in UK patent 1564800 which also discloses that the milk protein should be present in a finely dispersed form. In the majority of cases the milk protein is an alkali metal caseinate, which are commercially available in the form of powders.

Caseinate is only one of the proteins present in milk. The so-called "whey proteins" are more difficult to extract from milk than caseinate, as these proteins remain in solution at lower pH and cannot be recovered by acid precipitation. The properties of the different milk proteins are described in "Le Lait" 62 pp 611ff. 1982.

Skim-milk powder is also used in spreads. This contains about 35% protein of which less than a quarter is whey protein.

While caseinate has found many industrial uses there have been difficulties in the utilization of whey proteins. Indeed there has been some concern that the whey protein solution produced in for example the cheese industry should not be discharged into rivers without treatment, as such discharge can have damaging ecological effects. Recovery of the whey protein in concentrated form from the solution can be performed by heat-precipitation of the protein to give a denatured product. Membrane filtration can recover whey protein in a substantially undenatured form.

Previous attempts to employ whey in human food products, have not met with great success, despite the fact that powdered whey protein is available in the marketplace.

GB 1440182 discloses aqueous oil emulsions, that is oil-in-water emulsions, which contain less than 50% fat and a water phase at an acid pH comprising a globular protein obtained from whey complexed with an anionic polysaccharride such as sodium alginate. Virtually no coagulated protein is present in these products. These water-continuous mayonnaise or cream-like products are rather stable and can be whipped, incorporating air in the same manner as dairy cream. Other food uses of whey are described in EP 109868 wherein whey is employed in beverages, which are again water-continuous.

GB 1519044 discloses a low calorie water in oil emulsion in which the aqueous phase is at an acid pH and contains whey protein. In this disclosure, the whey protein obtained by membrane filtration is subsequently heated for 45 min at 80°C or 1 second at 105°C or intermediate temperatures for intermediate time. Whey protein is known to be denatured at temperatures at or above 80°C: as disclosed in US patent 4515825.

Undenatured whey protein as used in GB 1440182 is known to stabilise creams, by destabilising the water in oil emulsion which comprises the inverted form of the creams. For this reason, it is presumed, fat continuous spreads containing whey protein, such as disclosed in GB 1519044, have generally contained denatured whey, with only small amounts of native whey being present.

As mentioned above, methods are known for the recovery of whey in undenatured form. For example, GB 1155654 discloses how whey may be recovered in an undenatured form for use in the infant food industry. Such extraction is expensive.

A more serious difficulty is that in edible spread processing, it is commonplace to Pasteurise the process stream under time/temperature conditions which would denature whey protein. The effect of denaturation is precipitation, but this is not normally a problem as the protein is mostly casein rather then whey. Denaturation of whey removes the functional properties of the whey and can lead to a "mealy" product.

The use of heat denatured whey proteins in spreads is further described in EP 0076549. In this citation, the whey protein obtained by ultrafiltration is comprised in a cream which is Pasteurised at sufficiently high temperature to denature the whey.

According to a first aspect of the present invention there is provided a water-in-oil emulsion spread comprising from 35-80%wt of a fat phase and from 20-65% of a dispersed water phase, said water phase being at a pH of from 4.5-5.5 and comprising from 0.5-10.0%wt of a substantially completely dissolved and undenatured whey protein, and optionally, at most a minor amount of casein, wherein the lactose content of the water-phase is 0-20%wt on total protein content.

By, as far as possible (bearing in mind a requirement for Pasteurization) avoiding processing conditions leading to denaturation of the whey protein, one can obtain a product in which the protein is generally soluble in the product ph range specified. The advantages of a product with a pH in this range include an improved long-term resistance to microbiological spoilage.

Conveniently, the heat treatment of the emulsion is performed at a temperature of 65-80°C for a time of at least thirty seconds and preferably not more than ten minutes.

The advantage of undenatured whey being present is the avoidance of "mealyness" and the expression of additional functional properties of the expensive whey protein, such as water-binding ability and some effect as an emulsifier. Surprisingly we have found that this slight Pasteurization is sufficient to prevent spoilage without substantially denaturing the protein.

Accordingly a further aspect of the present invention provides a process for the production of an edible water in oil spread which comprises admixing an aqueous phase containing undenatured whey protein with a fatty phase and cooling and working the mixture until an edible fat-continuous emulsion results.

The thickening effect of the undenatured whey protein leads to improved spreads, as this enables the content of non-milk thickeners to be reduced. It is known that these other thickeners, such as gelatine, often carry or promote off-flavours or reduce the flavour impact of other components. We have also observed, that the organoleptic properties of a product containing undenatured whey protein are much improved due to the particular organoleptic properties of the whey protein. In the products according to the present invention it has been found beneficial to use a combination of the non-denatured whey and a hydrocolloid as the thickener system. Gelatine is particularly preferred as the thickener.

In order that the present invention may be better understood the following illustrative examples are given.

EXAMPLE 1:

A whey protein concentrate was obtained in the marketplace from the Milei Company. "Lactalbumin 70" (RTM) was found particularly suitable. This concentrate comprises 70% protein, 15% lactose, 3.3% minerals, 1.5% organic acids, 5.2% fat and 5% water.

To prepare the water-phase of the product 1 part of whey protein concentrate was dissolved in 120 parts of water plus butter serum together with 6 parts of food-grade gelatine. The proportion of butter serum to water was greatly in favour of the water and generally around 16 parts of butter serum to 104 parts water. The pH of this solution was lowered to 5.0 by the addition of citric acid. 0.32 parts of potassium sorbate was added as an optional preservative together with 0.4-0.8 parts of salt. This solution was heated to 40-60°C to dissolve the gelatin over a period of half of an hour or so.

To prepare the fat phase, anhydrous butter fat was heated to 40-50°C and mixed with an emulsifier. Commercially available saturated monoglycerides of the "Hymono" (RTM) type, in an amount of less than 0.5% on product were found to be suitable as emulsifier. A trace of β-carotene may optionally be added to the fat phase as a colouring agent. Other food grade emulsifiers and colours can be employed.

The fat and water phases were combined in an approximately 4:6 ratio, at a temperature exceeding 40°C and below 60°C to form a premix. The premix was carefully Pasteurised at a temperature of around 75°C for a period of 40-60 seconds. After Pasteurization the premix was processed through a normal low fat spreads production line comprising, in series, "VOTATOR" (RTM) 'A' and 'C' units in a so-called "-A-C-A-C-A-C-" sequence. An excellent product was obtained.

EXAMPLE 2:

Example 1 was repeated except that a 2 parts of a soured whey protein concentrate, commercially available as "Lactalbumin 70-S" (RTM) from the Milei Company, was employed instead of the previous whey protein concentrate. A comparable product to that obtained by the method of example 1 was produced.

EXAMPLE 3:

Example 2 was repeated except that a mixture of 2 parts of the soured whey protein concentrate and 1 part of sodium caseinate replaced the pure soured whey protein concentrate previously employed. The gelatine level was reduced to four parts. A comparable product to that obtained by the method of example 1 was produced.

EXAMPLE 4:

Example 1 was repeated with four parts of the whey protein concentrate and four parts of gelatine. Again the product quality was excellent.

**Claims**

1) A water-in-oil emulsion spread comprising from 35-80%wt of a fat phase and from 20-65% of a dispersed thickened water phase, said water phase being at a pH of from 4.5-5.5 and comprising from 0.5-10.0%wt of a substantially completely dissolved and undenatured whey protein, and optionally, a minor amount of casein, wherein the lactose content of the waterphase is 0-20%wt on total protein content.

2) A spread according to claim 1 which further comprises 0.1-6.0% gelatine by weight of product.

3) A spread according to claim 1 or 2 which comprises 35-45% fat by weight of product.

4) A spread according to any of claims 1-3 wherein the fat phase essentially consists of butterfat or fractions thereof.

5) A process for the production of a spread according to claim 1 which comprises admixing an aqueous phase containing undenatured whey protein with a fatty phase and cooling and working the mixture until an edible fat-continuous emulsion results.

6) A process for the production of a spread according to claim 1 which comprises admixing an cream of which the water phase comprises undenatured whey protein with a fatty phase and cooling and working the mixture until an edible fat-continuous emulsion results.

7) Process according to claim 5 or 6 wherein the aqueous ingredients of the spread are Pasteurised by heat treatment at a temperature of 65-80°C for a time of between thirty seconds and ten minutes.